Europäisches Patentamt

European Patent Office

Office européen des brevets

(11) Veröffentlichungsnummer: **0 421 082 A1**

## (12) EUROPÄISCHE PATENTANMELDUNG

(21) Anmeldenummer: 90114998.9

(22) Anmeldetag: 04.08.90

(51) Int. Cl.5: **F16H 7/12**

(30) Priorität: 30.09.89 DE 3932798

(43) Veröffentlichungstag der Anmeldung:
**10.04.91 Patentblatt 91/15**

(84) Benannte Vertragsstaaten:
**DE ES FR GB IT**

(71) Anmelder: **INA Wälzlager Schaeffler KG**
**Industriestrasse 1-3 Postfach 1220**
**W-8522 Herzogenaurach(DE)**

(72) Erfinder: **Speil, Walter, Dipl.-Ing.**
**Friedrich-Ebert-Strasse 60B**
**W-8070 Ingolstadt(DE)**
Erfinder: **Schmidt, Dieter**
**Billrothstrasse 6**
**W-8500 Nürnberg(DE)**

(74) Vertreter: **Klug, Horst, Dipl.-Ing. (FH)**
**c/o INA Wälzlager Schaeffler KG Postfach 12**
**20**
**W-8522 Herzogenaurach(DE)**

(54) **Riemenspanner.**

(57) Die Erfindung betrifft eine Spanneinrichtung für Riemen, Ketten und dergleichen, insbesondere für Zahnriemen im Ventilantrieb eines Verbrennungsmotors, mit einem am Motorblock festlegbaren Träger (1), an dem erstens ein eine Andruckrolle tragender Hebel schwenkbar gelagert ist, an dem zweitens ein Spannelement (16) angeordnet ist, das mit einem Kolben (15) auf den Hebel drückt und an dem drittens ein Anschlagglied angeordnet ist, das von einer Montagestellung in eine Betriebsstellung parallel zu seiner Längsachse (21) verstellbar ist, das in der Montagestellung mittels einer Anschlagfläche (22) den Hub (25) des Kolbens (15) in einer Zwischenstellung blockiert und das in der Betriebsstellung den Hub (25) des Kolbens (15) freigibt. Die Aufgabe der Erfindung ist es, eine derartige Spanneinrichtung so zu gestalten, daß in der Montagestellung und in der Betriebsstellung die beiden Lagen der Anschlagfläche (22) baulich vorbestimmt sind und nicht von einer manuellen Justierung des Anschlaggliedes abhängen. Diese Aufgabe wird dadurch gelöst, daß die Anschlagfläche (22) von einer Seitenfläche des Anschlaggliedes gebildet ist, die parallel zu seiner Längsachse (21) liegt. Auf diese Weise wird ein manuelles Justieren des Anschlaggliedes zwischen den beiden Stellungen vermieden, so daß Falscheinstellungen der Spanneinrichtung ausgeschlossen sind.

FIG. 3

FIG. 3A          FIG. 3B

## RIEMENSPANNER

Die Erfindung betrifft eine Spanneinrichtung für Riemen, Ketten und dergleichen, insbesondere für Zahnriemen im Ventilantrieb eines Verbrennungsmotors, mit einem am Motorblock festlegbaren Träger, an dem erstens ein eine Andruckrolle tragender Hebel schwenkbar gelagert ist, an dem zweitens ein Spannelement angeordnet ist, das mit einem Kolben auf den Hebel drückt, und an dem drittens ein Anschlagglied angeordnet ist, das von einer Montagestellung in eine Betriebsstellung parallel zu seiner Längsachse verstellbar ist, das in der Montagestellung mittels einer Anschlagfläche den Hub des Kolbens in einer Zwischenstellung blockiert und das in der Betriebsstellung den Hub des Kolbens freigibt.

An Spanneinrichtungen für Zahnriemen, über die die Ventile eines Verbrennungsmotors angetrieben werden, sind Forderungen gestellt, die bei Riemenspannern von Riemen, die andere Aggregate, beispielsweise eine Wasserpumpe oder eine Lichtmaschine, antreiben, eine untergeordnete Rolle spielen. So soll die Grundeinstellung der Spannung des Zahnriemens erfolgen, ohne daß die Spannung nachgemessen werden muß. Im Betriebstemperaturbereich auftretende Abstandsänderungen zwischen den Wellen des Ventilantriebs am Motorblock müssen ausgeglichen werden. Unausbleibliche Längungen des Zahnriemens während seiner Lebensdauer müssen ebenfalls ausgeglichen werden. Außerdem darf das Spannelement nicht so weit absinken, daß die Gefahr besteht, daß der Zahnriemen Zähne der Räder des Ventilantriebs überspringt.

Eine Spanneinrichtung der eingangs genannten Art ist in der US-PS 4 713 044 beschrieben. Bei dieser ist der Hebel in der Montagestellung in einer Zwischenstellung seines Hubes blockiert. Bei der Montage wird der Träger am Motorblock so weit verschwenkt, bis die Andruckrolle an dem Zahnriemen anliegt. Anschließend wird das Anschlagglied in die Betriebsstellung verstellt, wonach die Andruckrolle unter der Wirkung des Spannelements in einer Grundeinstellung gegen den Zahnriemen drückt.

Bei der US-PS 4 713 044 ist das Anschlagglied eine Schraube, deren dem Schraubenkopf abgewandte Fläche die Anschlagfläche bildet. Diese Anschlagfläche liegt somit senkrecht zur Längsachse der Schraube. Dies ist einerseits deswegen ungünstig, weil das Erreichen der vorgesehenen Montagestellung dann davon abhängt, ob die Schraube mehr oder weniger weit eingeschraubt wird. Geschieht das Einschrauben nicht exakt, dann wird die vorgesehene Zwischenstellung, in der der Kolben blockiert sein soll, nicht hinreichend genau erreicht. Andererseits ist dies auch deswegen ungünstig, weil die Schraube zum Einstellen der Betriebsstellung hinreichend weit herausgeschraubt werden muß. Geschieht dies nicht, dann wird der Hub auf einen zu kleinen Wert begrenzt, so daß bei einer Längung des Zahnriemens ein Überspringen der Zähne nicht ausgeschlossen ist. Das Einstellen der Betriebsstellung erfolgt nach dem Festsetzen des Trägers am Motorblock. Für die Betätigung der Schraube und deren Kontrolle sind die Raumverhältnisse äußerst beengt.

Bei der US-PS 4 713 044 greift die Schraube an einem kürzeren Hebelarm des Hebels an als der Kolben des Spannelements. Toleranzen des Hebels und der gegenseitigen Lage müssen also beim Einstellen der Montagestellung kompensiert werden. Der Kolben des Spannelements greift an einem längeren Hebelarm an als die Rolle. Dementsprechend muß der mögliche Hub des Kolbens größer sein als der gewünschte Hub der Andruckrolle.

Aufgabe der Erfindung ist es, eine Spanneinrichtung der eingangs genannten Art vorzuschlagen, bei der in der Montagestellung und in der Betriebsstellung die beiden Lagen der Anschlagfläche baulich vorbe stimmt sind und nicht von einer manuellen Justierung des Anschlaggliedes abhängen.

Erfindungsgemäß ist obige Aufgabe bei einer Spanneinrichtung der eingangs genannten Art dadurch gelöst, daß die Anschlagfläche von einer Seitenfläche des Anschlaggliedes gebildet ist, die parallel zu seiner Längsachse liegt.

Um das Anschlagglied von seiner Montagestellung in die Betriebsstellung zu bringen, wird es in der zu seiner Längsachse parallelen Richtung verstellt. Da die Anschlagfläche zur Längsachse parallel liegt, also der Hebel bzw. Kolben in der Montagestellung senkrecht zur Längsachse auf die Anschlagfläche drückt, ist die Montagestellung nur von der baulichen Anordnung der Längsachse, nicht jedoch davon abhängig, daß das Anschlagglied manuell in eine bestimmte Stellung justiert wird. Das Anschlagglied hat somit nur zwei wirksame Stellungen, nämlich die Montagestellung und die Betriebsstellung. Ein manuelles Justieren des Anschlaggliedes zwischen diesen beiden Stellungen erübrigt sich, so daß ein Falscheinstellen ausgeschlossen ist.

In bevorzugter Ausgestaltung der Erfindung liegt die Anschlagfläche in der Betriebsstellung außerhalb der Bewegungsbahn des Hebels. Damit ist erreicht, daß der maximale Hub des Spannelements während der Lebensdauer des Zahnriemens durch das Anschlagglied nicht begrenzt ist.

Eine bei den beengten Raumverhältnissen im Bereich des Motorblocks noch günstige Betätigungsmögichkeit für die Verstellung des Anschlaggliedes von der Montagestellung in die Betriebsstellung ist dadurch erreicht, daß die Längsachse des Anschlaggliedes parallel zur Schwenkachse des Hebels liegt.

Vorzugsweise ist das Anschlagglied von einem Anschlagstift oder einer zylindrischen Spannhülse gebildet, die reibschlüssig in einer Bohrung des Trägers geführt ist. Für die Verstellung von der Montagestellung in die Betriebsstellung oder umgekehrt, ist dabei nur eine axiale Beaufschlagung notwendig. Das Anschlagglied könnte jedoch auch von einem Schraubstift gebildet sein. Die Anlagefläche wäre dann dessen Gewinde.

Bei einer Weiterbitdung der Erfindung ragt das Anschlagglied in der Montagestellung in die Bewegungsrichtung des Kolbens. Vorzugsweise liegt dann am Hebel ein Bund eines Zapfens an, der einerseits am Kolben und andererseits in der Montagestellung am Anschlagglied ansteht. Dabei sind für das exakte Erreichen der vorgesehenen Montagestellung Toleranzen des Hebels weitgehend unmaßgeblich, da in der Montagestellung das Anschlagglied über den Zapfen den Kolben in der gewünschten Zwischenstellung hält.

Bei einer Weiterbildung der Erfindung greift das Anschlagglied und/oder der Kolben an einem Hebelarm des Hebels an, der kürzer ist als der Hebelarm des Hebels, an dem die Andruckrolle gelagert ist. Der Hub des Kolbens für den Spannbereich der Andruckrolle ist dementsprechend klein. Ein solch kleiner Hub des Kolbens des Spannelements ist möglich, weil das Anschlagglied das exakte Erreichen der Zwischenstellung ohne Justierung gewährleistet. Der kleine Hub des Spannelements hat den Vorteil, daß ein einfaches Spannelement verwendet werden kann.

Vorzugsweise ist das Spannelement in einem Gehäuse angeordnet, das einstückig mit der Lagerstelle des Anschlaggliedes am Träger ausgebildet ist. Durch die einstückige Anordnung ist die Zuordnung zwischen dem Kolben und dem Anschlagglied in der Montagestellung nur von wenigen und in engen Grenzen haltbaren Toleranzen abhängig.

Insgesamt ist die Spanneinrichtung in ihrer Bauweise und Umstellmöglichkeit einfach und erfüllt die oben genannten Betriebsbedingungen. Allerdings ist die Anwendung einer erfindungsgemäßen Spanneinrichtung nicht auf Zahnriemen im Ventiltrieb von Verbrennungsmotoren beschränkt, vielmehr ist ein vorteilhafter Einsatz auch in anderen Riementrieben und dergleichen denkbar.

Weitere vorteilhafte Ausgestaltungen der Erfindung ergeben sich aus den Unteransprüchen und der folgenden Beschreibung eines Ausführungsbeispiels. In der Zeichnung zeigen:

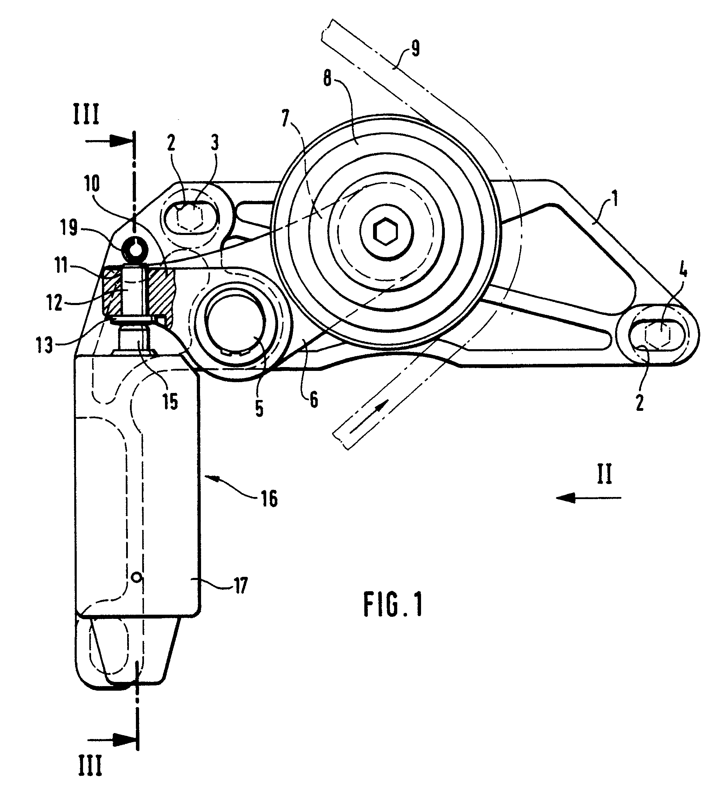

Fig. 1 eine Ansicht einer Spanneinrichtung

Fig. 2 eine Ansicht der Spanneinrichtung in Richtung des Pfeiles II nach Figur 1 und

Fig. 3 einen gegenüber Figur 1 vergrößerten Schnitt längs der Linie III-III nach Figur 1.

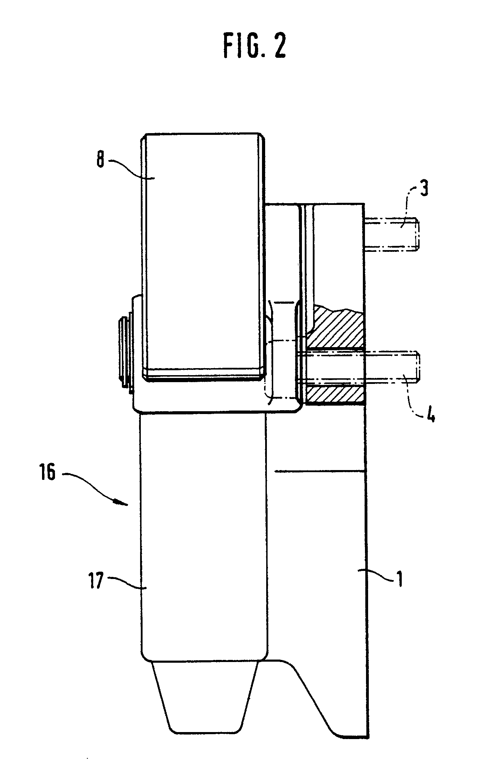

Eine Spanneinrichtung weist einen Träger 1 auf, der mit zwei Langlöchern 2 versehen ist. Durch die Langlöcher 2 sind Schrauben 3, 4 (vgl. Figur 2) geschoben, mit denen der Träger 1 an einem Motorblock festlegbar ist.

Am Träger 1 ist ein Lagerbolzen 5 befestigt, an dem ein zweiarmiger Hebel 6 schwenkbar gelagert ist. Am einen, längeren Arm 7 des Hebels 6 ist eine Andruckrolle 8 gelagert, die zur Anlage an einem Zahnriemen 9 bestimmt ist. Am anderen, kürzeren Arm 10 des Hebels 6 ist durch eine Bohrung 11 ein Zapfen 12 gesteckt. Dieser weist einen am Arm 10 anliegenden Bund 13 auf.

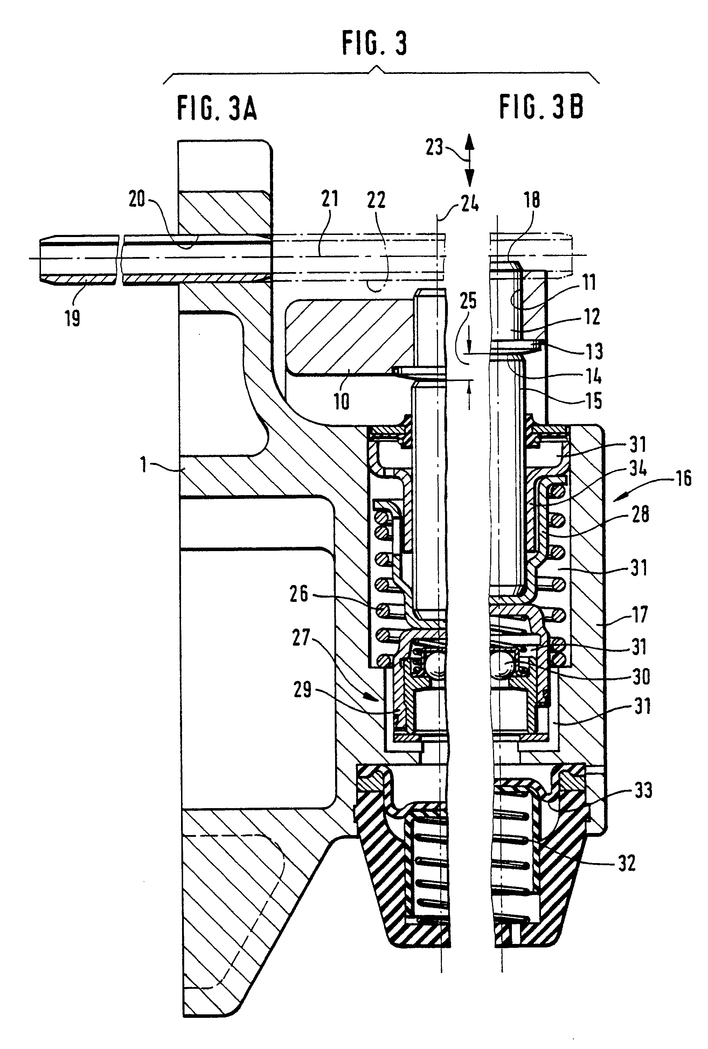

An demjenigen Ende 14 des Zapfens 12, an dem auch der Bund 13 vorgesehen ist, liegt ein Kolben 15 eines Spannelements 16 an. Das Spannelement 16 ist in einem Gehäuse 17 untergebracht, das einstückig mit dem Träger 1 ausgebildet ist (vgl. Figur 3).

Das dem Ende 14 gegenüberliegende andere Ende 18 des Zapfens 12 steht über den Arm 10 über und ist zur Anlage an einer zylindrischen Spannhülse 19 gebildet. Die Spannhülse 19 sitzt reibschlüssig in einer Bohrung 20 des Trägers 1. Sie ist in dieser in Richtung ihrer Längsachse 21 verschieblich. Die Längsachse 21 verläuft senkrecht zur Bewegungsrichtung des Kolbens 15 und parallel zur vom Lagerbolzen 5 gebildeten Schwenkachse des Hebels 6. Die Spannhülse 19 bildet an ihrem Außenumfang eine Anschlagfläche 22, die parallel zur Längsachse 21 liegt und zur Anlage an dem Ende 18 des Zapfens 12 bestimmt ist.

In Figur 3 ist die Spannhülse 19 mit durchgezogenen Linien in der Betriebsstellung dargestellt, in der sie vollständig außerhalb der Bewegungsbahn 23 des Kolbens 15 bzw. des Zapfens 12 und des Hebels 6 liegt. Rechts der Achse 24 des Kolbens 15 (Figur 3B) ist dieser und der Zapfen 12 mit dem Arm 10 in seiner ausgefahrenen Stellung dargestellt. Links der Achse 24 (Figur 3A) ist der Kolben 15 mit dem Zapfen 12 und dem Hebel 6 in seiner abgesunkenen Stellung gezeigt.

Zwischen diesen beiden Stellungen besteht ein Hub 25. Diesem Hub 25 entspricht der Spannbereich der Andruckrolle 8 für den Zahnriemen 9. Der Hub 25 beträgt beispielsweise 4 mm.

In Figur 3 ist strichpunktiert die Montagestellung der Spannhülse 19 dargestellt. In dieser Stellung drückt der Kolben 15 den Zapfen 12 an die Anschlagfläche 22. Der Kolben 15 ist damit in einer Zwischenstellung, etwa in der Mitte des Hubes 25 blockiert. Diese Stellung des Kolbens ist in Figur 3 nicht dargestellt. Sie liegt zwischen den rechts und links der Achse 24 dargestellten Stellungen.

Das Spannelement 16 weist eine Spannfeder 26 und eine hydraulische Dämpfungseinrichtung 27 auf. Die Spannfeder 26 stützt sich am Gehäuse 17 und an einer Hülse 28 ab, an der der Kolben 15 und ein Hohlkolben 29 der Dämpfungseinrichtung 27 anliegen. Innerhalb des Hohlkolbens 29 ist in bekannter Weise ein Rückschlagventil 30 angeordnet. Hydrauliköl enthaltende Räume sind mit 31 bezeichnet. Mittels einer durch eine Druckfeder 32 belasteten Membran 33 ist der Öldruck aufrechterhalten.

Der Kolben 15 ist in einer Führungshülse 34 gelagert, die sich in dem Gehäuse 17 erstreckt.

Die Funktionsweise der beschriebenen Einrichtung ist im wesentlichen folgende:
In der Montagestellung der Spannhülse 19 liegt der Zapfen 12 an deren Anschlagfläche 22 an. Der Kolben 15 und die Spannfeder 26 sowie der Hohlkolben 29 der Dämpfungseinrichtung 27 sind dadurch in einer bau lich vorbestimmten Zwischenstellung des Hubes 25 gehalten.

In dieser Montagestellung wird die Spanneinrichtung mittels der Schrauben 3, 4 zunächst lose am Motorblock angebracht. Der Träger 1 wird dann so weit in Richtung auf den Zahnriemen 9 verschoben, bis die Andruckrolle 8 an den Zahnriemen anliegt. Auf eine besondere Anpreßkraft kommt es dabei nicht an. Danach wird der Träger 1 mittels der Schrauben 3, 4 am Motorblock festgesetzt. Anschließend wird die Spannhülse 19 in Richtung ihrer Längsachse 21 durch den Träger 1 geschoben, bis sie außerhalb der Bewegungsbahn 23 des Zapfens 12 und des Hebels 6 steht. Sie befindet sich damit in der Betriebsstellung. Es drückt nun die Spannfeder 26 über den Kolben 15 und den Bund 13 auf den Arm 10 des Hebels 6. Dieser drückt seinerseits die Andruckrolle 8 gegen den Zahnriemen 9.

Im Betrieb des Motors hält die Andruckrolle 8 die Spannung des Zahnriemens 9 mittels der Spannfeder 26 aufrecht, deren Bewegung in an sich bekannter Weise durch die hydraulische Dämpfungseinrichtung 27 gedämpft ist.

Bei Wartungsarbeiten am Zahnriemen 9 wird vor dessen erneutem Spannen der Zapfen 12 niedergedrückt und die Spannhülse 19 in ihre Montagestellung verschoben. Danach kann der Zahnriemen 9 wieder in der oben beschriebenen Weise gespannt werden.

## Ansprüche

1. Spanneinrichtung für Riemen, Ketten und dergleichen, insbesondere für Zahnriemen im Ventilantrieb eines Verbrennungsmotors, mit einem am Motorblock festlegbaren Träger, an dem erstens ein eine Andruckrolle tragender Hebel schwenkbar gelagert ist, an dem zweitens ein Spannelement angeordnet ist, daß mit einem Kolben auf den Hebel drückt, und an dem drittens ein Anschlagglied angeordnet ist, das von einer Montagestellung in eine Betriebsstellung parallel zu seiner Längsachse verstellbar ist, das in der Montagestellung mittels einer Anschlagfläche den Hub des Kolbens in einer Zwischenstellung blockiert und das in der Betriebsstellung den Hub des Kolbens freigibt, **dadurch gekennzeichnet,** daß die Anschlagfläche (22) von einer Seitenfläche des Anschlaggliedes (19) gebildet ist, die parallel zu seiner Längsachse (21) liegt.

2. Spanneinrichtung nach Anspruch 1, **dadurch gekennzeichnet,** daß die Anschlagfläche (22) in der Betriebsstellung außerhalb der Bewegungsbahn (23) des Hebels (6) liegt.

3. Spanneinrichtung nach Anspruch 1 oder 2, **dadurch gekennzeichnet,** daß die Längsachse (21) des Anschlaggliedes (19) parallel zur Schwenkachse (5) des Hebels (6) liegt.

4. Spanneinrichtung nach einem der vorhergehenden Ansprüche, **dadurch gekennzeichnet,** daß das Anschlagglied von einem Anschlagstift oder einer zylindrischen Spannhülse (19) gebildet ist, die reibschlüssig in einer Bohrung (20) des Trägers (1) geführt ist.

5. Spanneinrichtung nach einem der vorhergehenden Ansprüche, **dadurch gekennzeichnet,** daß das Anschlagglied (19) in der Montagestellung in die Bewegungsrichtung des Kolbens (15) ragt.

6. Spanneinrichtung nach Anspruch 5, **dadurch gekennzeichnet,** daß am Hebel (6) ein Bund (13) eines Zapfens (12) anliegt, der einerseits am Kolben (15) des Spannelements (16) und andererseits in der Montagestellung an der Anschlagfläche (22) des Anschlaggliedes (19) ansteht.

7. Spanneinrichtung nach einem der vorhergehenden Ansprüche, **dadurch gekennzeichnet,** daß das Anschlagglied (19) und/oder der Kolben (15) an einem Hebelarm (10) des Hebels (6) angreift, der kürzer ist als der Hebelarm (7) des Hebels (6), an dem die Andruckrolle (8) gelagert ist.

8. Spanneinrichtung nach einem der vorhergehenden Ansprüche, **dadurch gekennzeichnet,** daß das Spannelement (16) in einem Gehäuse (17) angeordnet ist, das einstückig mit der Lagerstelle (20) des Anschlaggliedes (19) am Träger (1) ausgebildet ist.

FIG.1

# FIG. 2

# FIG. 3

## FIG. 3A          FIG. 3B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | FR-A-2 609 139   (KOYO SEIKO., CO., LTD.) <br> * Seite 6; Figur 2 * <br> – – – | 1-3,4 | F 16 H <br> 7/12 |
| A | DE-A-3 717 125   (FUJI JUKOGYO K.K.) <br> * Spalten 3 - 4; Figur 1 * <br> – – – | 1,7,8 | |
| A | US-A-4 713 045   (AISIN SEIKI KABUSHIKI KAISHA) <br> * Figur 1 * <br> – – – | 1,3,8 | |
| D,A | US-A-4 713 044   (NISSAN MOTOR CO.) <br> * Zusammenfassung; Figur 4 * <br> – – – – – | 1,8 | |

| | |
|---|---|
| | **RECHERCHIERTE SACHGEBIETE (Int. Cl.5)** |
| | F 16 H |

Der vorliegende Recherchenbericht wurde für alle Patentansprüche erstellt

| Recherchenort | Abschlußdatum der Recherche | Prüfer |
|---|---|---|
| Den Haag | 02 Januar 91 | FLORES E. |